# EUROPEAN PATENT APPLICATION

(11) **EP 3 270 032 A1**
(43) Date of publication of application: **17.01.2018**
(21) Application number: 16761749.7
(22) Date of filing: 08.03.2016
(51) Int. Cl.: F16L 59/065, B32B 5/26, F25D 23/06

(54) **VACUUM INSULATED PANEL, CORE MATERIAL, AND REFRIGERATOR**

(30) Priority: 10.03.2015 JP 2015047266; 13.03.2015 JP 2015050734; 16.03.2015 JP 2015052093; 17.03.2015 JP 2015053458; 17.03.2015 JP 2015053459; 17.03.2015 JP 2015053460; 17.03.2015 JP 2015053454; 17.03.2015 JP 2015053455; 17.03.2015 JP 2015053456; 17.03.2015 JP 2015053457; 17.03.2015 JP 2015053450; 17.03.2015 JP 2015053451
(71) Applicant: Toshiba Lifestyle Products & Services Corporation, Kawasaki-shi, Kanagawa 210-8543 (JP)
(72) Inventor: KOJIMA, Kenji, Kawasaki-shi, Kanagawa 210-8543 (JP); SHINAGAWA, Eiji, Kawasaki-shi, Kanagawa 210-8543 (JP); UEMATSU, Ikuo, Tokyo 105-8001 (JP); HAYAMIZU, Naoya, Tokyo 105-8001 (JP); OOSHIRO, Kenichi, Tokyo 105-8001 (JP)
(74) Representative: Henkel, Breuer & Partner
(86) International application number: PCT/JP2016/057132
(87) International publication number: WO 2016/143781

(57) **Abstract**

A vacuum insulated panel according to an embodiment of the present invention is provided with: a core material comprising resin fibers; and a monomer-adsorbing material that is added to the core material and that adsorbs monomers derived from the resin fibers.

## Description

### Technical Field

Embodiments of the present invention relate to a vacuum insulation panel, a core material constituting a vacuum insulation panel, and a refrigerator including a vacuum insulation panel.

### Background Art

It is conceived that a vacuum insulation panel is used as a heat insulation material for various apparatuses and facilities such as, for example, a refrigerator. The vacuum insulation panel of this type has a problem that gas is generated after reducing the pressure inside thereof. For example, Patent Literature 1 focuses on the fact that a large part of the entire gas after the reduction in pressure is moisture, and discloses that an adsorbent for adsorbing such gas and water vapor is included. By the way, in recent years, it is conceived that a core material of a vacuum insulation panel is constructed of resin fibers. When such resin fibers are included, low molecules are generated from the resin fibers after the reduction in pressure. Therefore, with only the adsorbent for adsorbing moisture, it is impossible to cope with such low molecules derived from the resin fibers. Thus, there is a risk that the vacuum level of the vacuum insulation panel is deteriorated.

### Citation List

### Patent Literature

### Patent Literature 1

Japanese Patent Laid-Open No. 2010-53980

### Summary of Invention

### Technical Problem

The present embodiments provide: a vacuum insulation panel capable of suppressing a decrease in the vacuum level even when a core material is constructed of resin fibers; the core material constituting the vacuum insulation panel; and a refrigerator including the vacuum insulation panel.

### Solution to Problem

A vacuum insulation panel according to the present embodiment includes: a core material composed of resin fibers; and a low-molecule adsorbent, added to the core material, for adsorbing low molecules derived from the resin fibers.

A vacuum insulation panel according to the present embodiment includes: a core material composed of resin fibers; and a low-molecule adsorbent, added to the core material, for adsorbing low molecules derived from the resin fibers. The core material has a groove section. Further, in a predetermined region including the groove section, a small-addition-amount region in which the addition amount of the low-molecule adsorbent is less than that in other region is provided.

### Brief Description of Drawings

[Figure 1] Figure 1 is a schematic view showing a core material and a nonwoven fabric of a vacuum insulation panel according to a first embodiment.
[Figure 2] Figure 2 is a schematic cross-sectional view showing the vacuum insulation panel.
[Figure 3A] Figure 3A is an exploded perspective view schematically showing the core material of the vacuum insulation panel.
[Figure 3B] Figure 3B is a side view schematically showing the core material of the vacuum insulation panel.
[Figure 4] Figure 4 is a schematic view showing a side view of the core material of the vacuum insulation panel.
[Figure 5] Figure 5 is a view showing a state in which a low-molecule adsorbent and a moisture adsorbent are added to the core material.
[Figure 6] Figure 6 is a schematic perspective view showing a heat insulation box of a refrigerator.
[Figure 7] Figure 7 is a schematic perspective view showing a vacuum insulation panel set in a refrigerator.
[Figure 8] Figure 8 is a schematic cross-sectional view showing a vacuum insulation panel according to a second embodiment.
[Figure 9] Figure 9 is a schematic cross-sectional view of the vacuum insulation panel including a heat radiation pipe in a groove section.
[Figure 10] Figure 10 is a perspective view (Part 1) of a core material schematically showing an arrangement example of a small-addition-amount region and a large-addition-amount region.
[Figure 11] Figure 11 is a perspective view (Part 2) of a core material schematically showing an arrangement example of a small-addition-amount region and a large-addition-amount region.
[Figure 12] Figure 12 is a perspective view (Part 3) of a core material schematically showing an arrangement example of a small-addition-amount region and a large-addition-amount region.
[Figure 13] Figure 13 is a perspective view (Part 4) of a core material schematically showing an arrangement example of a small-addition-amount region and a large-addition-amount region.

### Description of Embodiments

The following will explain a plurality of embodiments with reference to the drawings. In each of the embodiments, substantially the same elements are denoted by the same reference numerals, and explanations are omitted.

### (First embodiment)

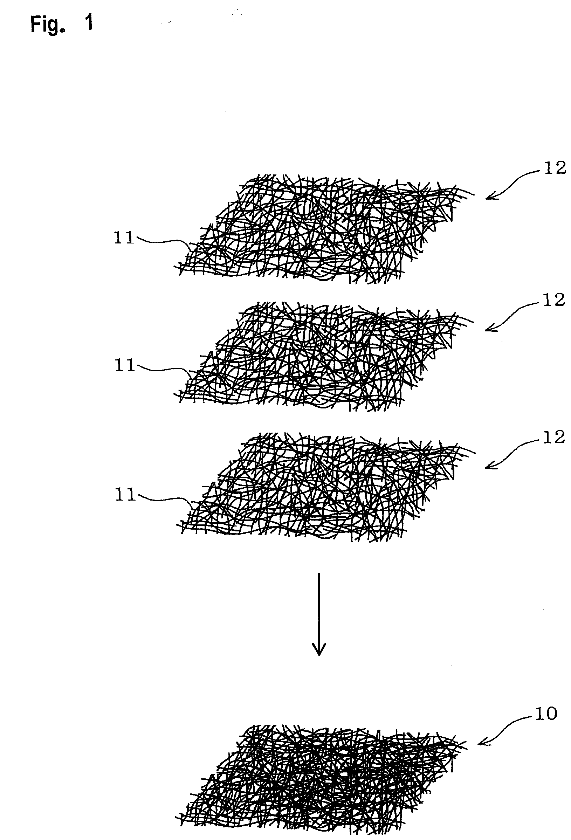

As shown in Figure 1, a core material 10 includes a plurality of layers of nonwoven fabric 11 stacked together. The nonwoven fabric 11 is made of randomly entangled resin fibers 12. The resin fibers 12 are formed by an electrospinning method. The resin fibers 12 formed by the electrospinning method are fine fibers having an average fiber diameter of about 1 µm, and are long fibers whose length is 1,000 times or more of the outer diameter. The resin fiber 12 is not entirely linear but is in a randomly curved wavy form. Therefore, the resin fibers 12 are easily entangled with each other, and a plurality of layers are easily formed. The use of the electrospinning method enables the spinning of the resin fibers 12 and the formation of the nonwoven fabric 11 to be carried out simultaneously. As a result, it is possible to easily form the core material 10 in less man-hour.

Moreover, the use of the electrospinning method easily enables the resin fibers 12 constituting the nonwoven fabric 11 to have an extremely thin outer diameter ranging from nanometer to micrometer. Hence, the thickness of each sheet of the nonwoven fabric 11 becomes very thin, and the thickness of the core material 10 is also reduced. In the case of conventional glass fibers, the fiber length is short, and the entanglement between the fibers is less. Therefore, when the glass fibers are used, it is difficult to maintain the shape of the nonwoven fabric. Additionally, in the case of using glass fibers, it is usually difficult to simultaneously carry out the spinning of glass fibers and the formation of nonwoven fabric. When the conventional glass fibers are used, a nonwoven fabric is formed in a paper-making manner in a state in which the glass fibers are dispersed in water. If the spinning of glass fibers and the formation of nonwoven fabric are carried out simultaneously, a cotton-like nonwoven fabric with a large thickness is formed, and it is difficult to form a thin nonwoven fabric with a small thickness.

Thus, in this embodiment, the core material 10 is formed by a plurality of layers of the nonwoven fabric 11 stacked together. The core material 10 includes, for example, several hundred to several thousand layers or more of the nonwoven fabric 11 stacked together. The resin fibers 12 forming the nonwoven fabric 11 of this embodiment are formed to have a substantially uniform circular or oval cross section.

The resin fibers 12 forming the nonwoven fabric 11 are formed from an organic polymer having a density smaller than that of glass. The formation of the resin fibers 12 from a polymer having a density smaller than that of glass makes it possible to reduce the weight of the resin fibers 12. For the nonwoven fabric 11, two or more kinds of resin fibers 12 may be mixed. As an example of the nonwoven fabric 11 formed by mixed spinning, polystyrene fibers and aromatic polyamide-based resin (registered trademark: Kevlar) are used. In addition to the above, it is possible to form the nonwoven fabric 11 by mixed spinning of one kind or two or more kinds of polymers selected from polycarbonate, polymethyl methacrylate, polypropylene, polyethylene, polyethylene terephthalate, polybutylene terephthalate, polyamide, polyoxymethylene, polyamideimide, polyimide, polysulfone, polyethersulfone, polyetherimide, polyether ether ketone, polyphenylene sulfide, modified polyphenylene ether, syndiotactic polystyrene, liquid crystal polymer, urea resin, unsaturated polyester, polyphenol, melamine resin, epoxy resin, and copolymers including these polymers.

In the case when the resin fibers 12 are formed by the electrospinning method, the polymer is made into a solution. As a solvent, it is possible to use, for example, a volatile organic solvent, such as isopropanol, ethylene glycol, cyclohexanone, dimethylformamide, acetone, ethyl acetate, dimethylacetamide, N-methyl-2-pyrrolidone, hexane, toluene, xylene, methyl ethyl ketone, diethyl ketone, butyl acetate, tetrahydrofuran, dioxane, and pyridine, or water. As the solvent, it is possible to select one kind from the above solvents, or mix a plurality of kinds of solvents. The solvents applicable to this embodiment are not limited to the above-mentioned solvents. The above-mentioned solvents are merely examples.

In this case, the mixed-spun resin fibers 12 are set so that the outer diameter d of each fiber satisfies d < 1 µm. Mixed-spinning a plurality of kinds of resin fibers 12 in this manner achieves an improvement in the heat insulation property, light-weight, and strength of the nonwoven fabric 11. In the nonwoven fabric 11, if the volume of space formed between the entangled resin fibers 12 decreases, the number of the spaces increases contrarily. The greater the number of spaces between the resin fibers 12, the higher the heat insulation property. Therefore, it is preferred to reduce the outer diameter d of fiber of the resin fibers 12 forming the nonwoven fabric 11 to a nanometer order satisfying d < 1 µm. By reducing the outer diameter d of the resin fiber 12 in this manner, the volume of space formed between the resin fibers 12 is decreased and the number of the spaces is increased. Thus, by reducing the diameter in this manner, the volume of space formed between the entangled resin fibers 12 becomes smaller, the number of the spaces is increased, and the heat insulation property of the nonwoven fabric 11 is improved.

For the resin fiber 12, various kinds of inorganic fillers such as, for example, a silicon oxide, a hydroxide of metal, carbonate, sulfate and silicate may be added. By adding the inorganic filler to the resin fibers 12 in this manner, it is possible to improve the strength of the nonwoven fabric 11 while keeping the heat insulation property of the nonwoven fabric 11. More specifically, as the inorganic filler to be added, it is possible to use wollastonite, potassium titanate, xonotlite, gypsum fiber, aluminum borate, MOS (basic magnesium sulfate), aramid fiber, carbon fiber, glass fiber, talc, mica, glass flake, and so on.

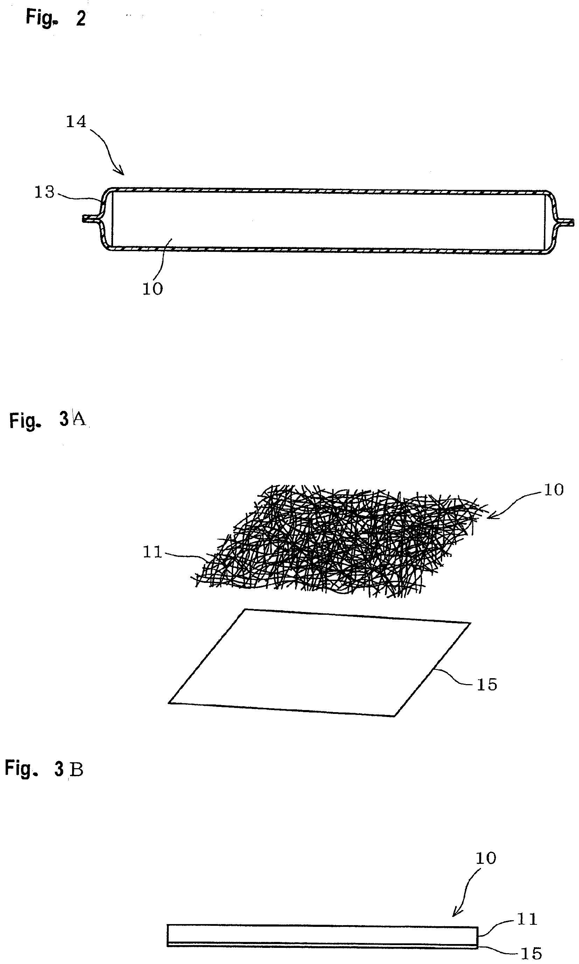

The core material 10 formed by the nonwoven fabric 11 is contained in a bag-like outer packaging material 13 as shown in Figure 2. The outer packaging material 13 is made of an airtight sheet material which has no gas permeability by, for example, vapor-depositing a metal or a metal oxide on one or more layers of a resin film. The outer packaging material 13 containing the core material 10 is sealed after reducing the pressure in the inside including the core material 10 to a pressure close to a vacuum. Consequently, the outer packaging material 13 containing the core material 10 is formed as a vacuum insulation panel 14. In this case, the vacuum insulation panel 14 may contain a frame member serving as the frame inside the outer packaging material 13 in order to reduce breakage of the formed vacuum insulation panel 14.

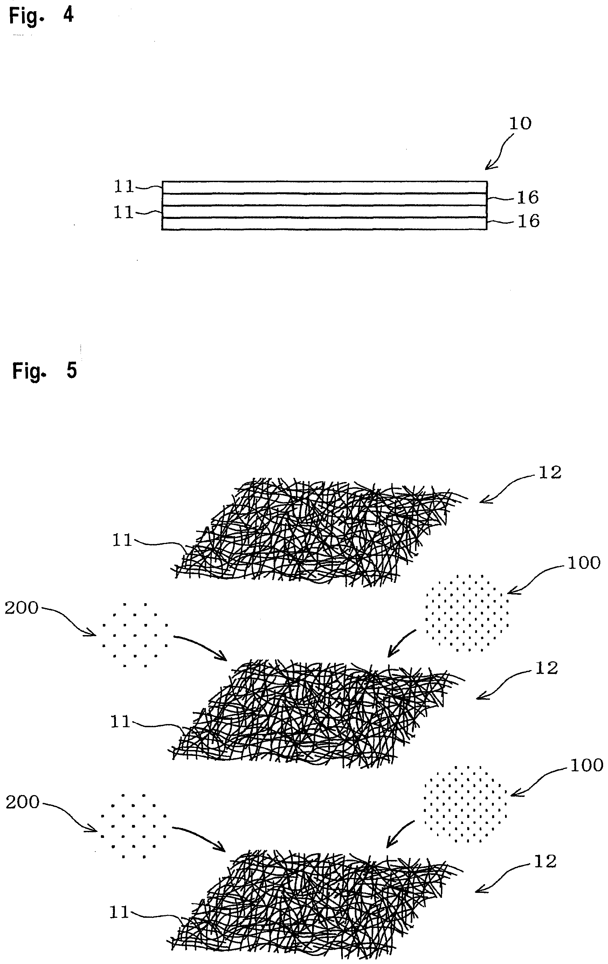

As shown in Figure 3A and Figure 3B, the core material 10 may include an aluminum foil 15 on one surface of the layers. After the core material 10 formed by the nonwoven fabric 11 as described above is contained in the outer packaging material 13, the pressure inside the outer packaging material 13 is reduced to form the vacuum insulation panel 14. Therefore, there is a risk that the vacuum insulation panel 14 is broken or deformed by the reduction in pressure inside the outer packaging material 13. By providing the aluminum foil 15 on one surface of the nonwoven fabric 11, the strength of the core material 10 is improved. It is thus possible to reduce breakage and deformation caused by the reduction in pressure. The core material 10 may also include a glass fiber layer 16 which is stacked together with the nonwoven fabric 11 as shown in Figure 4. The strength of the glass fiber layer 16 is higher than that of the nonwoven fabric 11 made of fine resin fibers 12. Therefore, by stacking the nonwoven fabric 11 and the glass fiber layer 16 together, the thickness and weight of the core material 10 are increased as compared with the case where the core material 10 is formed by only the nonwoven fabric 11, but it is possible to reduce breakage and deformation caused by the reduction in pressure. The glass fiber layer 16 is not limited to the two layers shown in Figure 4, and may be one layer or three or more layers.

Further, as shown in Figure 5, a low-molecule adsorbent 100 and a moisture adsorbent 200 are added to the core material 10 of the vacuum insulation panel 14 according to this embodiment. In this case, the low-molecule adsorbent 100 and the moisture adsorbent 200 are spread between the nonwoven fabrics 11 made of the resin fibers 12. The low-molecule adsorbent 100 adsorbs low molecules generated from the resin fibers 12. In this case, the low-molecule adsorbent 100 is composed of synthetic zeolite, and physically adsorbs low molecules. The adsorption action by such a physical adsorption system is reversible, and the low molecules adsorbed by the low-molecule adsorbent 100 are easily separated from the low-molecule adsorbent 100 by, for example, the application of a certain degree of heat. The low-molecule adsorbent 100 is not limited to zeolite. On the other hand, the moisture adsorbent 200 adsorbs moisture. In this case, the moisture adsorbent 200 is composed of calcium oxide, and chemically adsorbs moisture. The adsorption action by such a chemical adsorption system is irreversible. Even when a certain degree of heat is applied, the moisture adsorbed by the moisture adsorbent 200 is unlikely separated from the moisture adsorbent 200. The moisture adsorbent 200 is not limited to calcium oxide.

In particular, after reducing the pressure inside the outer packaging material 13 containing the core material 10, low molecules are easily generated from the resin fibers 12. With the vacuum insulation panel 14 according to this embodiment, such low molecules derived from the resin fibers 12 are adsorbed by the low-molecule adsorbent 100. Thus, even when the core material 10 is constructed of the resin fibers 12, it is possible to suppress a decrease in the vacuum level in the vacuum insulation panel 14. Moreover, according to the vacuum insulation panel 14, the moisture in the inside is also adsorbed by the moisture adsorbent 200. Therefore, it is possible to further suppress a decrease in the vacuum level in the vacuum insulation panel 14.

In particular, after reduction in pressure inside the outer packaging material 13 containing the core material 10, the low molecules are also easily generated from the resin film constituting the outer packaging material 13. According to the vacuum insulation panel 14, even such low molecules derived from the outer packaging material 13 are also adsorbed by the low-molecule adsorbent 100. Thus, it is possible to suppress a decrease in the vacuum level in the vacuum insulation panel 14.

In this case, the addition amount of the low-molecule adsorbent 100 is larger than the addition amount of the moisture adsorbent 200. In other words, the whole or most part of the core material 10 according to this embodiment is composed of the resin fibers 12. Hence, there is a tendency to increase the amount of low molecules derived from the resin fibers 12. Therefore, by increasing the addition amount of the low-molecule adsorbent 100, it is possible to adsorb more low molecules derived from the resin fibers 12. This embodiment is implemented by suitably adjusting the addition amount of the low-molecule adsorbent 100 and the addition amount of the moisture adsorbent 200. For example, the addition amounts of both of the adsorbents may be equal, or the addition amount of the low-molecule adsorbent 100 may be smaller than that of the moisture adsorbent 200.

The resin fibers 12 may be molded by, for example, a melt spinning method. The melt spinning method is a method of producing the resin fibers 12 by heating and melting the raw material of the resin fibers 12, extruding the raw material from a nozzle into air or water and cooling down the material.

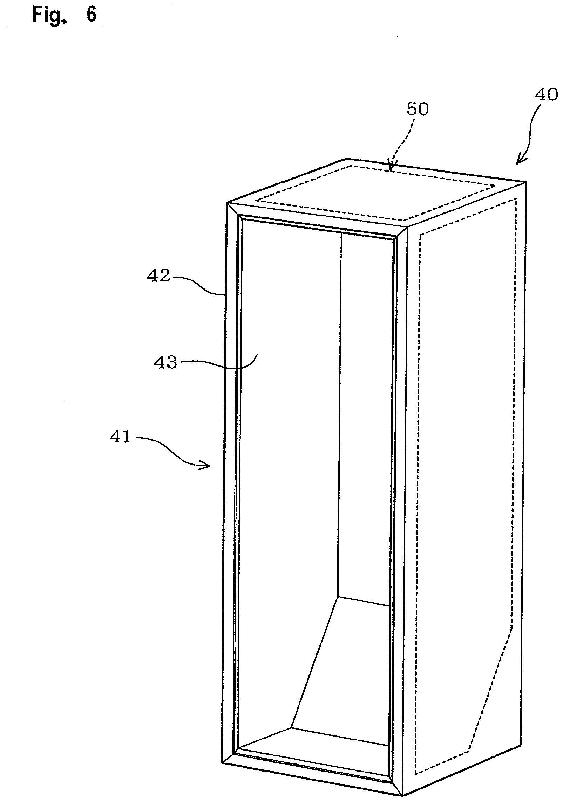

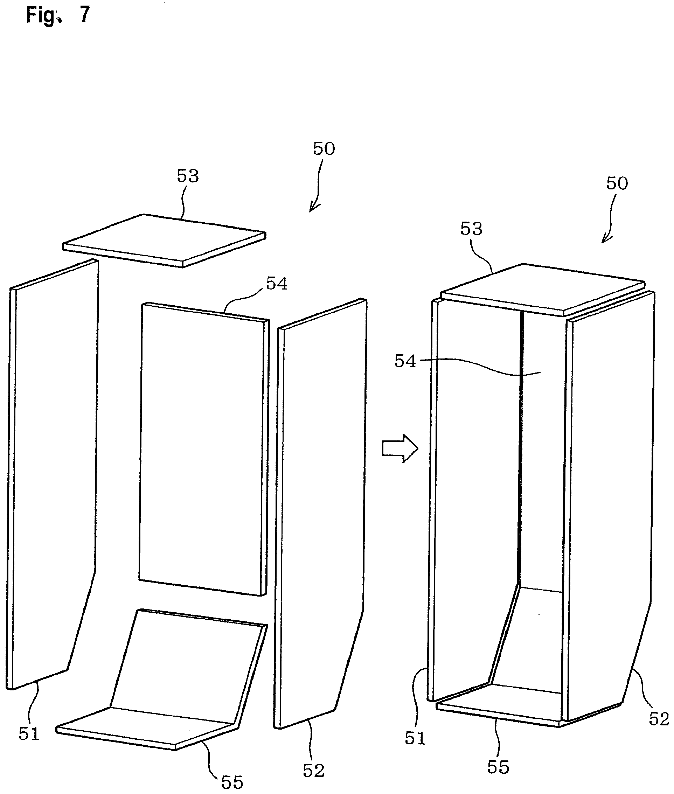

Next, a refrigerator using the vacuum insulation panel 14 will be described with reference to Figure 6 and Figure 7.

A refrigerator 40 includes a heat insulation box 41 whose front face is open as shown in Figure 6. In the refrigerator 40, the heat insulation box 41 is provided with a refrigeration cycle (not shown). In addition, the refrigerator 40 includes a partition plate (not shown) for partitioning the heat insulation box 41 into a plurality of storage compartments, a heat insulation door (not shown) covering the front side of the storage compartments, a drawer (not shown) which moves back and forth inside the storage compartment, and so on. The heat insulation box 41 of the refrigerator 40 includes an outer box 42, an inner box 43, and a vacuum insulation panel set 50 sandwiched between the outer box 42 and the inner box 43. The outer box 42 is formed from a steel plate, and the inner box 43 is formed from a synthetic resin.

The vacuum insulation panel set 50 is divided in correspondence with the respective wall parts of the heat insulation box 41 of the refrigerator 40. More specifically, as shown in Figure 7, the vacuum insulation panel set 50 is divided into a left wall panel 51, a right wall panel 52, a ceiling panel 53, a rear wall panel 54, and a base wall panel 55. Each of the left wall panel 51, the right wall panel 52, the ceiling panel 53, the rear wall panel 54 and the base wall panel 55 is constructed of the above-mentioned vacuum insulation panel 14. The left wall panel 51, the right wall panel 52, the ceiling panel 53, the rear wall panel 54 and the base wall panel 55 are assembled as the vacuum insulation panel set 50, and sandwiched between the outer box 42 and the inner box 43. Gaps formed between the respective left wall panel 51, right wall panel 52, ceiling panel 53, rear wall panel 54 and base wall panel 55 constituting the vacuum insulation panel set 50 between the outer box 42 and the inner box 43 are sealed by a heat insulation seal member (not shown). The seal member is formed from, for example, a foaming resin.

Thus, the refrigerator 40 includes the vacuum insulation panel set 50 constituting the heat insulation box 41. The vacuum insulation panel set 50 is constructed of the above-described vacuum insulation panel 14. Therefore, it is possible to provide high heat insulation performance while further reducing thickness and weight.

In the case where the vacuum insulation panel 14 is applied to the refrigerator 40, it is preferred to arrange the addition amount of the low-molecule adsorbent 100 to be larger on the interior side of the vacuum insulation panel 14 than that on the exterior side of the vacuum insulation panel 14. In other words, the vacuum insulation panel 14 tends to have a lower temperature on the interior side than that on the exterior side. As described above, the adsorption action by the low-molecule adsorbent 100 is reversible. Therefore, by increasing the amount of the low-molecule adsorbent 100 existing on the thermally stable interior side, it is possible to reduce the re-release of the low molecules adsorbed once.

The vacuum insulation panel according to this embodiment includes: the core material composed of resin fibers; and the low-molecule adsorbent, added to the core material, for adsorbing low molecules derived from the resin fibers. According to this structure, since the low molecules derived from the resin fibers 12 are adsorbed without being freed in the vacuum insulation panel 14, it is possible to suppress a decrease in the vacuum level even when the core material 10 is constructed of the resin fibers 12.

### (Second embodiment)

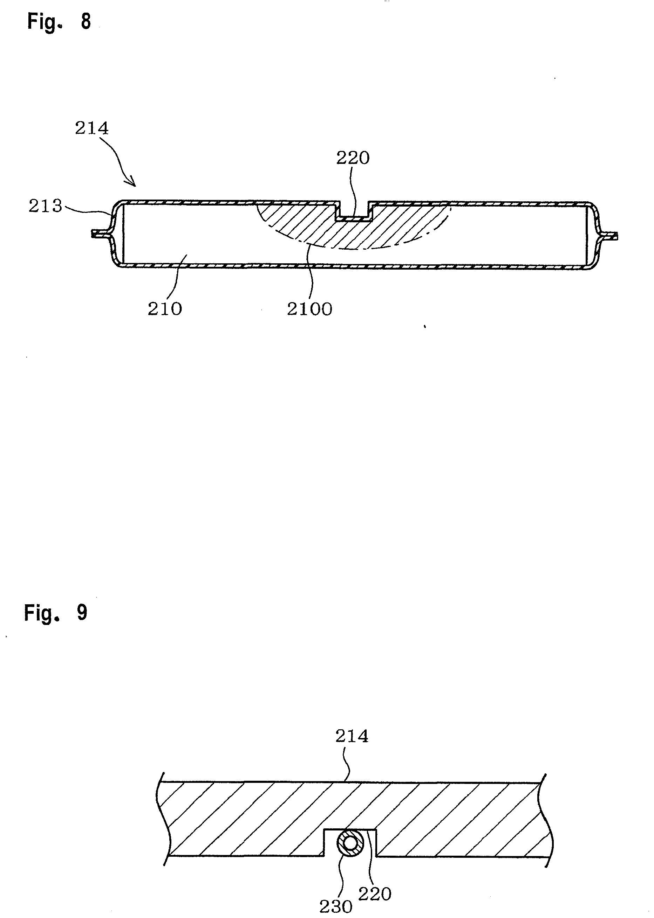

A vacuum insulation panel 214 according to this embodiment has a feature in the arrangement position of a low-molecule adsorbent. In other words, as illustrated in Figure 8, a core material 210 constituting the main body part of the vacuum insulation panel 214 has a groove section 220 in a surface thereof. The core material 210 has, in a predetermined area including the groove section 220, a small-addition-amount region 2100 in which the addition amount of the low-molecule adsorbent is smaller than that in other region. This embodiment may be implemented by suitably modifying the size or shape of the small-addition-amount region 2100. In other words, the vacuum insulation panel 214 only has to be constructed so that a region in which the addition amount of the low-molecule adsorbent is smaller than that in other region is provided in the vicinity of the groove section 220.

As illustrated in Figure 9, for example, in the case where the vacuum insulation panel 214 is applied to a refrigerator, a heat radiation pipe 230 is provided in the groove section 220. The heat radiation pipe 230 constitutes a part of a refrigeration cycle of the refrigerator, and releases heat when a high-temperature, high-pressure refrigerant discharged from a compressor flows in it. By utilizing the heat released from the heat radiation pipe 230, troubles such as dew condensation are avoidable. However, as described above, since the adsorption action of the low-molecule adsorbent is reversible, there is a risk that the adsorbed low molecules may be released again under the influence of heat from the heat radiation pipe 230.

According to the vacuum insulation panel 214 of this embodiment, in the periphery of the groove section 220 where a heat source such as, for example, the heat radiation pipe 230 is provided, the addition amount of the low-molecule adsorbent is smaller than that in other part. In other words, in a region in which there is a possibility of being affected by the heat from the heat source, the addition amount of the low-molecule adsorbent is decreased. With this structure, it is possible to decrease the amount of the low-molecule adsorbent that re-releases the low molecules under the influence of heat from the heat source, and consequently it is possible to reduce the low molecules being freed in the vacuum insulation panel 214. Therefore, even when the core material 210 is constructed of the resin fibers 12, it is possible to suppress a decrease in the vacuum level.

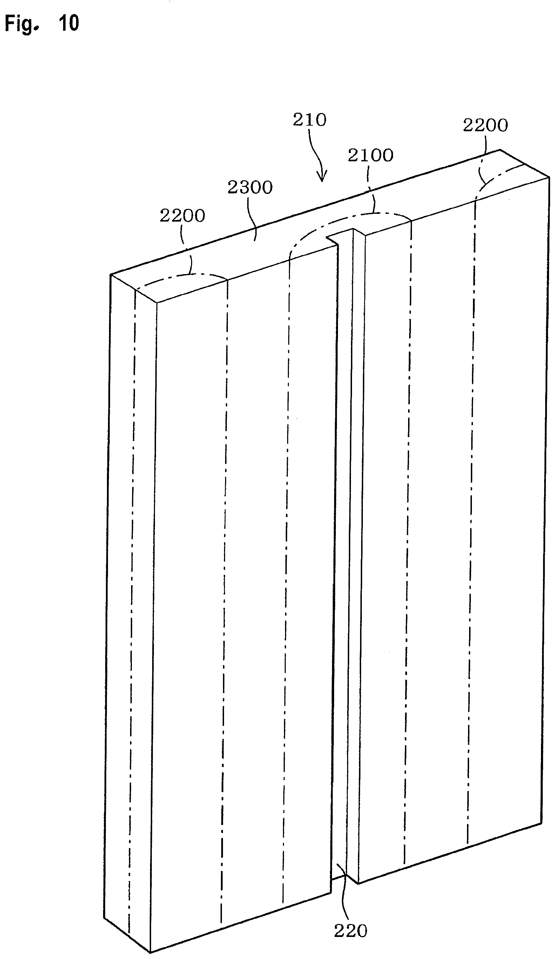

As shown in Figure 10 to Figure 13, the core material 210 of the vacuum insulation panel 214 may include, in addition to the small-addition-amount region 2100, a large-addition-amount region 2200 in which the addition amount of the low-molecule adsorbent is larger than that in the small-addition-amount region 2100. In the structure shown in Figure 10, the core material 210 has a substantially flat plate shape as a whole; and includes the groove section 220 at a substantially central section of one surface of the core material 210. The large-addition-amount region 2200 is provided at both end sections in the same surface as that the groove section 220 is provided in. Other region of the core material 210 excluding the small-addition-amount region 2100 and the large-addition-amount region 2200 is an intermediate-addition-amount region 2300 in which the addition amount of the low-molecule adsorbent is larger than that in the small-addition-amount region 2100 but smaller than that in the large-addition-amount region 2200. The large-addition-amount region 2200 may be provided only at one end section in the same surface as that the groove section 220 is provided in. The vacuum insulation panel 214 may also be constructed so that the low-molecule adsorbent is not added in a region other than the small-addition-amount region 2100 and the large-addition-amount region 2200.

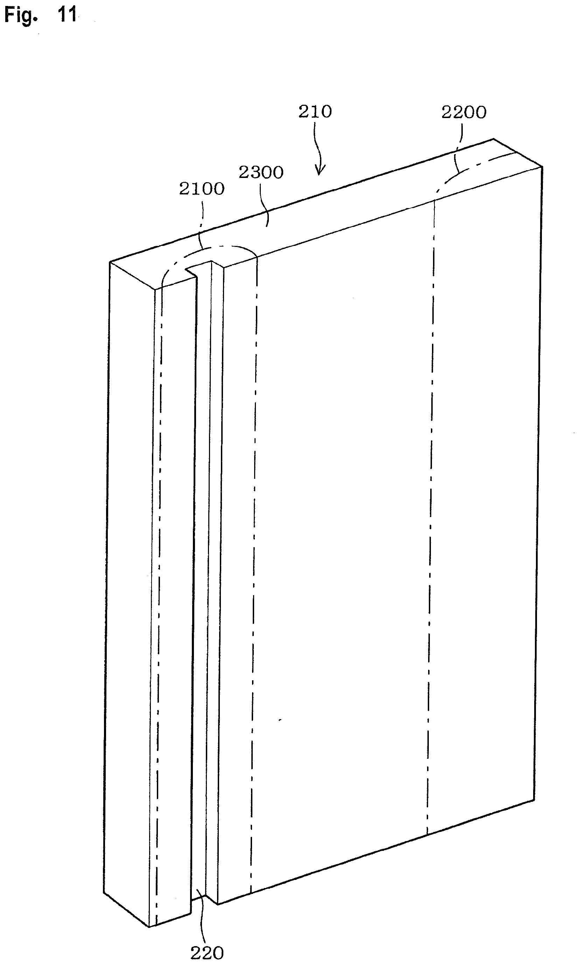

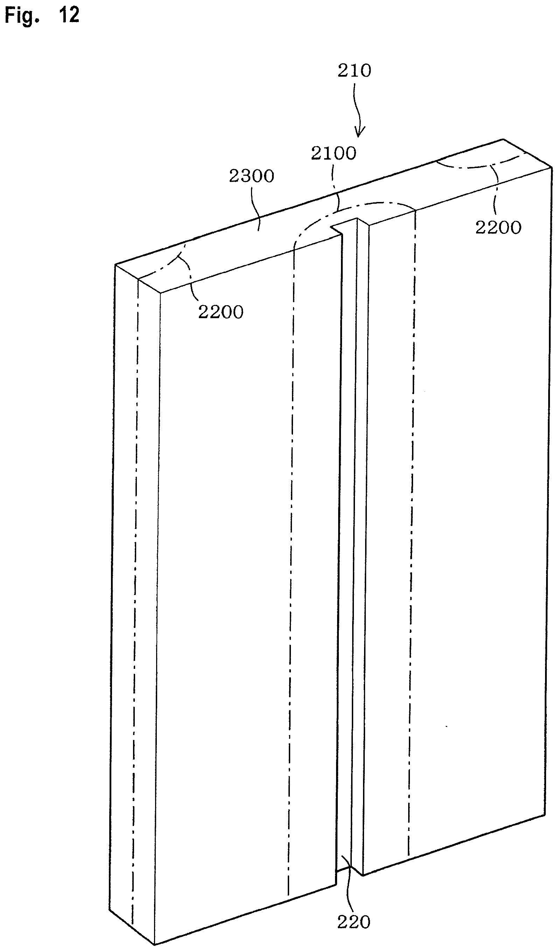

In the structure shown in Figure 11, the core material 210 has a substantially flat plate shape as a whole, and the groove section 220 is provided at an end section in one surface of the core material 210. The large-addition-amount region 2200 is provided at an end section on the opposite side of the groove section 220 in the same surface as that the groove section 220 is provided in. In the structure illustrated in Figure 12, the core material 210 has a substantially flat plate shape as a whole, and the groove section 220 is provided at a substantially central section of one surface of the core material 210. The large-addition-amount region 2200 is provided at both end sections in the opposite surface to the surface where the groove section 220 is provided. The large-addition-amount region 2200 may be provided only at one end section in the surface opposite to the surface where the groove section 220 is provided.

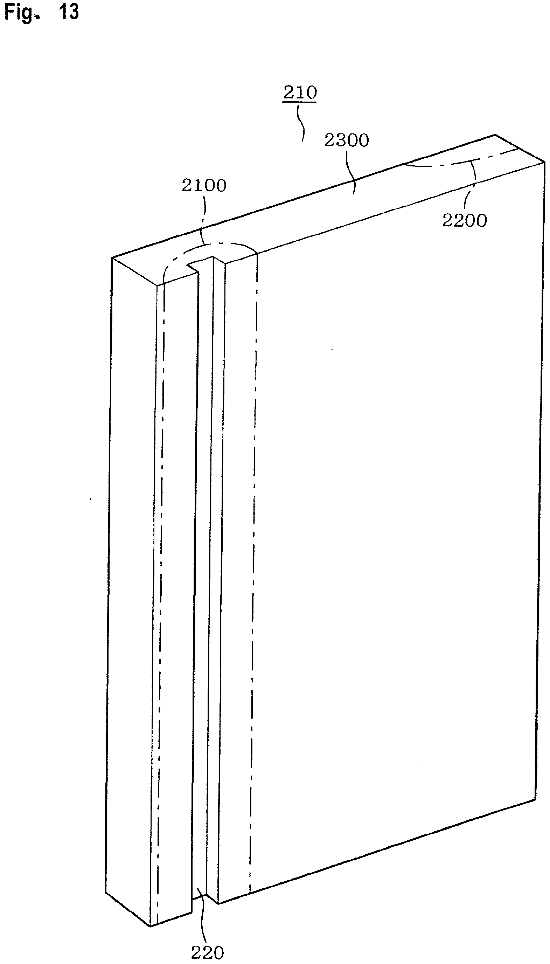

In the structure illustrated in Figure 13, the core material 210 has a substantially flat plate shape as a whole, and the groove section 220 is provided at an end section in one surface of the core material 210. The large-addition-amount region 2200 is provided at an end section on the opposite side of the groove section 220 in the surface opposite to the surface where the groove section 220 is provided. For example, the structure examples of Figures 10 and 12 may be combined, and the core material 210 may be constructed so that the large-addition-amount region 2200 is provided at both end sections or one end section in the same surface as that the groove section 220 is provided in, and at both end sections or one end section in the surface opposite to the surface where the groove section 220 is provided. The structure examples of Figure 11 and Figure 13 may also be combined, and the core material 210 may be constructed so that the large-addition-amount region 2200 is provided at an end section on the opposite side of the groove section 220 in the same surface as that the groove section 220 is provided in, and at an end section on the opposite side of the groove section 220 in the surface opposite to the surface where the groove section 220 is provided.

As described above, this embodiment may be implemented by suitably modifying the arrangement position of the large-addition-amount region 2200 according to the position of the groove section 220 of the core material 210. In other words, by providing the large-addition-amount region 2200 at a position away from the small-addition-amount region 2100 including the groove section 220 as much as possible, it is possible to increase the amount of the low-molecule adsorbent that is less likely affected by the heat from the heat source provided in the groove section 220. Consequently, it is possible to adsorb more low molecules and reduce the re-release of the low molecules adsorbed once.

The resin fibers 12 may be molded by, for example, a melt spinning method. The melt spinning method is a method of producing the resin fibers 12 by heating and melting the raw material of the resin fibers 12, extruding the raw material from a nozzle into air or water, and cooling down the material.

When the vacuum insulation panel 214 is applied to a refrigerator, the heat radiation pipe 230 constructing a part of a refrigeration cycle is provided in the groove section 220 provided in the vacuum insulation panel 214. According to the refrigerator 40 including the vacuum insulation panel 214, the vacuum insulation panel set 50 constituting the heat insulation box 41 is provided. The vacuum insulation panel set 50 is constructed of the above-described vacuum insulation panel 214. Hence, it is possible to ensure high heat insulation performance while further reducing thickness and weight. The addition amount of the low-molecule adsorbent is smaller in the periphery of the groove section 220 of the vacuum insulation panel 214. Therefore, it is possible to avoid the re-release of the low molecules due to heat from the heat radiation pipe 230 provided in the groove section 220, and it is possible to keep the vacuum level of the vacuum insulation panel 214 and suppress a lowering of heat insulation performance.

The vacuum insulation panel according to this embodiment includes: a core material composed of resin fibers; and a low-molecule adsorbent, added to the core material, for adsorbing low molecules derived from the resin fibers. The core material has a groove section. Moreover, in a predetermined region including the groove section, a small-addition-amount region in which the addition amount of the low-molecule adsorbent is smaller than that in other region is provided. According to this structure, it is possible to avoid the re-release of the low molecules adsorbed by the low-molecule adsorbent, and it is possible to suppress a decrease in the vacuum level even when the core material is constructed of resin fibers. The vacuum insulation panel 214 may be constructed without including the moisture adsorbent.

### (Other Embodiment)

The above-described plurality of embodiments may be combined and implemented.

The present embodiments are presented as examples, and are not intended to limit the scope of the invention. These novel embodiments may be implemented in other various forms, and various omissions, substitutions and changes may be made without departing from the content of the invention. The present embodiments and modifications thereof are included within the scope and content of the invention, and included within the scope of the invention as set forth in the claims and equivalents thereof.

## Claims

1. A vacuum insulation panel comprising:
a core material composed of resin fibers; and
a low-molecule adsorbent, added to the core material, for adsorbing low molecules derived from the resin fibers.

2. The vacuum insulation panel according to Claim 1, further comprising a moisture adsorbent, added to the core material, for adsorbing moisture,
wherein an addition amount of the low-molecule adsorbent is larger than an addition amount of the moisture adsorbent.

3. The vacuum insulation panel according to Claim 1 or 2,
wherein an adsorption system of the low-molecule adsorbent and an adsorption system of the moisture adsorbent are different from each other.

4. The vacuum insulation panel according to any one of Claims 1 to 3,
wherein the core material has a groove section, and
in a predetermined region including the groove section, a small-addition-amount region in which an addition amount of the low-molecule adsorbent is smaller than in other region is provided.

5. The vacuum insulation panel according to Claim 4,
wherein a large-addition-amount region in which an addition amount of the low-molecule adsorbent is larger than that in the small-addition-amount region is provided.

6. The vacuum insulation panel according to Claims 4 or 5,
wherein the core material has a flat plate shape,
the groove section is provided in one surface of the core material, and
the large-addition-amount region is provided in the same surface as that the groove section is provided in.

7. A core material included in the vacuum insulation panel according to any one of Claims 1 to 6.

8. A refrigerator comprising the vacuum insulation panel according to any one of Claims 1 to 6.
